# FASCICULE DE BREVET EUROPEEN

(11) **EP 1 615 853 B1**
(45) Date de publication et mention de la délivrance du brevet: **03.10.2018**
(21) Numéro de dépôt: 04742496.5
(22) Date de dépôt: 14.04.2004
(51) Int. Cl.: C01G 3/10, C01G 3/00, A01N 59/20

(54) **PROCEDE DE FABRICATION D'HYDROXOSULFATES DE CUIVRE ET COMPOSITIONS FONGICIDES CUPRIQUES LES CONTENANT**
VERFAHREN ZUR HERSTELLUNG VON KUPFERHYDROXOSULFATEN UND FUNGIZIDE ZUSAMMENSETZUNGEN DIESE ENTHALTEND
METHOD OF PRODUCING COPPER HYDROXOSULPHATES AND COPPER FUNGICIDAL COMPOSITIONS CONTAINING SAME

(30) Priorité: 16.04.2003 FR 0304784
(43) Date de publication de la demande: 18.01.2006
(73) Titulaire: CEREXAGRI S.A., 78370 Plaisir (FR)
(72) Inventeur: FERRIER, Frédéric, 13012 Marseille (FR); JONCHERAY, Gérard, 27200 Vernon (FR); PILLOT, Marc, 13127 Vitrolles (FR)
(74) Mandataire: Weber, Jean-François
(86) Numéro de dépôt international: PCT/FR2004/000913
(87) Numéro de publication internationale: WO 2004/094315

(56) Documents cités:
- EP-A- 0 766 919
- US-A- 3 725 535
- G. DENK, F. LESCHHORN: "Über die Reaktion der Hydroxide von Kupfer, Zink, Cadmium und Nickel mit den Sulfaten, Chloriden, Nitraten und Perchloraten dieser Metalle." Z. ANORG. ALLG. CHEM., vol. 336, 1965, pages 58-65, XP002305160 cité dans la demande
- GERHARTZ W ET AL: "Ullmann's Encyclopedia of Industrial Chemistry, Vol. A7, 5ième Edition," 1986, VCH-VERLAG , WEINHEIM , XP002006217 Basic Copper Sulfates page 582 - page 583
- E.H. ERICH PIETSCH: "Basische Kupfer(II)-Sulfate" 1958, VERLAG CHEMIE , WEINHEIM , XP002266377 Gmelins Handbuch der Anorganischen Chemie page 579 - page 585 page 580, ligne 1 - ligne 48 page 582, ligne 48 - page 583, ligne 2

## Description

La présente invention concerne le domaine des produits phytosanitaires et a plus particulièrement pour objet un procédé de fabrication de suspensions aqueuses d'hydroxosulfates de cuivre tels que la brochantite et l'antlérite, ou un mélange des deux, à forte teneur pondérale en cuivre, et leur emploi pour la préparation de compositions fongicides cupriques sous forme de poudres, granulés ou suspensions concentrées, dispersibles dans l'eau.

Les hydroxosulfates de cuivre représentent le principe actif de la bouillie bordelaise. La bouillie bordelaise est un des plus vieux fongicides utilisés contre le mildiou de la vigne. Son utilisation résulte de l'observation d'Alexis Millardet, professeur à la faculté de Bordeaux, qui mit en évidence en 1885 l'efficacité de cette préparation cuprique sur le mildiou de la vigne (plasmopara viticola).

A l'heure actuelle, la bouillie bordelaise occupe une place essentielle parmi les préparations cupriques fongicides. Sa protection contre le mildiou de la vigne et ses actions complémentaires telles que la limitation de la pourriture grise, de l'oïdium, de la pourriture acide et des tumeurs bactériennes font de cette préparation cuprique un produit majeur de la protection de la vigne. En arboriculture, la bouillie bordelaise présente des efficacités sur pommier et poirier contre le chancre européen, la tavelure et le feu bactérien. Sur pêcher et nectarine, elle est utilisée contre la cloque, le dépérissement bactérien. La diversité de ses utilisations se vérifie également dans le cas des cultures maraîchères. On peut citer par exemple son utilisation contre le mildiou et les bactérioses de la tomate ou contre les maladies des taches angulaires et des taches pourpres et rouges des fraisiers. Son efficacité contre le mildiou de la vigne, ses multiples actions complémentaires sur les autres organismes phytopathogènes et sa faible phytotoxicité font de la bouillie bordelaise un des fongicides le plus polyvalent de la protection phytosanitaire.

L'efficacité fongicide de la bouillie bordelaise et son absence de phytotoxicité est liée à sa composition polyphasée de complexes de cuivre (encore appelés hydroxosulfates de cuivre), parmi lesquels la brochantite de formule Cu₄(SO₄)(OH)₆ et l'antlérite de formule Cu₃(SO₄)(OH)₄. Ces hydroxosulfates de cuivre libèrent selon une cinétique lente et constante des ions cuivriques dans l'environnement du parasite, ce qui confère à la bouillie bordelaise une activité fongicide inégalée par les autres formes cupriques fongicides comme l'hydroxyde de cuivre ou l'oxychlorure de cuivre, et un compromis optimal efficacité - absence de phytotoxicité.

Il réside cependant un inconvénient majeur dans l'utilisation de la bouillie bordelaise, qui provient de la quantité de produits mis en oeuvre par l'utilisateur. En effet, une bouillie bordelaise classique est constituée, outre d'un mélange d'hydroxosulfates de cuivre, d'un mélange polyphasé de complexes calciques, sous-produits inhérents à sa synthèse réalisée à partir de sulfate de cuivre et de chaux.

Ces sous-produits peuvent représenter plus de 50% de la formule et sont constitués essentiellement de gypse et de bassanite.

Des améliorations dans le procédé de fabrication de la bouillie bordelaise ont été apportées pour obtenir une formule dont le cuivre est sous la forme de brochantite et dont la teneur en bassanite dans la formule à l'état sec est limitée à 20%; ces améliorations ont fait l'objet du brevet FR 2 739 256.

Cependant, dans le cas de cette bouillie bordelaise optimisée, la teneur pondérale en principe actif représenté par l'ion cuivrique n'excède pas 27,3%. Comme conséquence, la teneur en cuivre des compositions de bouillie bordelaise ne peut dépasser 25% en poids et a généralement pour valeur 20% en poids, contrairement aux autres formulations cupriques, à base d'hydroxyde de cuivre ou d'oxychlorure de cuivre, dont la teneur en cuivre peut atteindre 40% voire 50% en poids. Cela est dû au fait que les formes cupriques hydroxyde de cuivre ou oxychlorure de cuivre possèdent respectivement 65% et 58% en poids d'ion cuivrique. Considérant la dose homologuée de 2,4 kg de cuivre par hectare, il ressort qu'un traitement par une composition de bouillie bordelaise s'effectue avec 12 kg de produit formulé, alors que les spécialités plus titrées en cuivre permettent l'utilisation de quantités plus faibles de produit formulé, 6 kg voire 4,8 kg de produit formulé.

D'autres voies classiquement utilisées pour la fabrication des hydroxosulfates sont la neutralisation de solutions de sulfate de cuivre par de la soude ou de la potasse. Ces procédés permettent après un lavage poussé des produits précipités d'obtenir des hydroxosulfates de cuivre dont la teneur en cuivre des matières solides est supérieure à 48%. Cependant, la phase de lavage fournit de grandes quantités d'effluents chargés de sulfate de sodium ou de potassium. Ce type de procédé ne peut donc être envisagé industriellement.

La brochantite et l'antlérite peuvent aussi être obtenues à partir de la réaction de l'oxyde cuivrique avec le sulfate de cuivre selon les équations suivantes :

3 CuO + CuSO₄ + 3 H₂O → Cu₄(OH)₆SO₄

2 CuO + CuSO₄ + 2 H₂O → CU₃(OH)₄SO₄

Ces réactions sont déjà décrites dans la littérature. On peut citer Encyclopedia of Electrochemistry of the elements - Vol II - Allen J. Bard où les potentiels standards des réactions d'oxydo-réduction avec les oxydes de cuivre sont donnés.

O. Binder, dans les Annales de Chimie, tome 5, 336 (1936), étudie l'obtention des sels basiques de cuivre par l'action des solutions aqueuses de sulfate de cuivre ou d'acide sulfurique sur l'oxyde ou l'hydroxyde de cuivre bivalent en utilisant la méthode des isothermes de solubilité et la méthode des restes. L'existence des sels basiques (autre dénomination des hydroxosulfates de cuivre), mis en évidence par ces deux méthodes, a été confirmée par l'étude des spectres de diffraction des rayons X. Ces travaux mettent en évidence la formation d'antlérite quand la température de réaction est 100°C et la formation à 22°C du sel de cuivre SO₃, 4 CuO, 4 H₂O qui, par déshydratation à 150°C, conduit à la brochantite.

Ces mêmes travaux sont décrits et approfondis par E.H. Erich Pietsch dans l'encyclopédie Gmelins Handbuch der Anorganischen Chemie, 1958, Verlag Chemie, pages 579-585.

Dans le brevet US 3,725,535 il est mentionné que la préparation de sulfates basiques de cuivre à partir d'oxyde de cuivre CuO et de sulfate de cuivre est difficile et lente.

La publication Denk, Leschhorn, Z. Anorg. Allgem. Chem. 336, 58 (1965) décrit la réactivité entre l'hydroxyde de cuivre et le sulfate de cuivre. Il est précisé que l'oxyde CuO peut être utilisé de la même manière que l'hydroxyde de cuivre. Des conditions opératoires sont données (rapports molaires, température) ainsi que des conditions de mise en oeuvre des réactifs (concentration, ordre d'introduction des réactifs...), mais ces conditions ne permettent pas une réactivité totale de l'oxyde de cuivre et les concentrations des suspensions d'hydroxosulfate de cuivre obtenues sont trop faibles pour envisager un développement industriel.

Il a maintenant été trouvé un nouveau procédé de fabrication d'hydroxosulfates de cuivre tels que la brochantite ou l'antlérite ou un mélange des deux, par réaction d'une solution aqueuse de sulfate de cuivre CuSO₄ avec une suspension aqueuse d'oxyde de cuivre ou d'hydroxyde de cuivre, qui présente l'avantage de limiter la quantité de sous-produits formés (gypse, sulfate de sodium ou de potassium) et de conduire à des suspensions dont la teneur pondérale en matières solides est supérieure à 10% ; de plus, la teneur pondérale en cuivre de la phase solide, constituée d'au moins 85% d'hydroxosulfates de cuivre, est supérieure à 48%.

L'invention a donc d'abord pour objet un procédé de fabrication de suspensions aqueuses de brochantite (Cu₄(OH)₆SO₄) ou d'antlérite (Cu₃(OH)₄SO₄) ou d'un mélange des deux, ayant une teneur pondérale en matières solides supérieure à 10%, par réaction d'une solution aqueuse de sulfate de cuivre CuSO₄ avec une suspension aqueuse d'oxyde de cuivre ou d'hydroxyde de cuivre utilisés selon un rapport molaire SO₄/Cu total allant de 0,25 à 0,40, ledit procédé étant caractérisé en ce que l'on mélange une solution aqueuse de CuSO₄ ayant une concentration pondérale en cuivre comprise entre 6% et 10% avec une suspension aqueuse d'oxyde de cuivre ou d'hydroxyde de cuivre ayant une concentration comprise entre 15% et 50% en poids et dont le diamètre moyen des particules solides est inférieur à 25 µm, la réaction étant réalisée à température contrôlée comprise entre 40°C et 100°C.

Sauf mention contraire dans la description, les pourcentages exprimés représentent des pourcentages en poids.

L'invention a également pour objet un procédé de préparation de compositions fongicides cupriques demandées par le marché à partir des suspensions aqueuses de brochantite ou d'antlérite ou d'un mélange des deux ainsi obtenues, et aussi les compositions fongicides cupriques telles que préparées selon ce procédé :
- bouillie bordelaise enrichie en cuivre comme seul fongicide, qui comporte une teneur en cuivre comprise entre 30 et 45%.
- association de cette bouillie bordelaise enrichie en cuivre avec au moins un fongicide de synthèse, qui conduit à une teneur en cuivre comprise entre 15% et 40%, de préférence entre 18% et 40%.
suivant les présentations suivantes :
- formulation de type WP (poudre mouillable) dispersible dans l'eau
- formulation de type WG (granulé dispersible) à granulométrie apparente plus élevée (de l'ordre de 50 à 400 µm) dispersible dans l'eau ne dégageant pas ou peu de poussières au moment de leur emploi
- formulation liquide de type SC (suspension concentrée) dispersible dans l'eau.

Les suspensions aqueuses d'hydroxosulfates de cuivre tels que la brochantite ou l'antlérite ou un mélange des deux sont obtenues selon le procédé de l'invention à partir d'une solution aqueuse de sulfate de cuivre et une suspension aqueuse d'oxyde de cuivre ou d'hydroxyde de cuivre utilisées avec un rapport molaire SO₄/Cu, où Cu représente le nombre de moles de cuivre sous toutes les formes, compris entre 0,25 et 0,40.

La teneur pondérale en cuivre de la solution aqueuse de sulfate de cuivre introduite dans le milieu réactionnel peut varier entre 6% et 10%. Cependant, il est préférable d'utiliser une solution aqueuse de sulfate de cuivre dont la teneur en cuivre est comprise entre 6,5% et 8% et, plus particulièrement, entre 6,6% et 7,6%.

La suspension aqueuse d'oxyde de cuivre ou d'hydroxyde de cuivre utilisée dans le procédé a une concentration comprise entre 15% et 50% en poids, de préférence entre 20% et 30% en poids. Le diamètre des particules de la suspension aqueuse d'oxyde de cuivre ou d'hydroxyde de cuivre est un paramètre critique qui conditionne le bon déroulement réactionnel. Un broyage est généralement effectué dans les conditions connues de l'homme du métier pour augmenter significativement la surface spécifique de ces suspensions et ainsi leur réactivité. On cherchera à obtenir pour la suspension aqueuse d'oxyde de cuivre ou d'hydroxyde de cuivre, une granulométrie dont le diamètre moyen des particules solides est inférieur à 25 µm, de préférence compris entre 0,1 et 10 µm et plus particulièrement entre 0,5 et 5 µm et dont le refus au tamisage humide à 25 µm par rapport à l'extrait sec est inférieur à 5% en poids, et plus particulièrement inférieur à 2 % en poids (selon la méthode CIPAC MT 59.3). Le broyage de l'oxyde de cuivre ou de l'hydroxyde de cuivre en suspension peut être effectué éventuellement en présence de sulfate de cuivre. La présence de sulfate de cuivre dans la suspension aqueuse d'oxyde de cuivre ou d'hydroxyde de cuivre permet d'optimiser le broyage de l'oxyde de cuivre en milieu acide, et par conséquent d'augmenter sa réactivité.

La solution aqueuse de sulfate de cuivre et la suspension aqueuse d'oxyde de cuivre ou d'hydroxyde de cuivre décrites précédemment sont mélangées dans le procédé selon l'invention après avoir été l'une et/ou l'autre préalablement portée(s) à une température initiale au plus égale à 100°C. L'ordre d'addition des réactifs n'est pas un paramètre critique pour l'obtention de la brochantite, mais pour l'obtention exclusive d'antlérite, il est nécessaire que la suspension aqueuse d'oxyde de cuivre ou d'hydroxyde de cuivre soit ajoutée à la solution aqueuse de sulfate de cuivre préalablement portée à une température initiale au plus égale à 100°C.

Il a été aussi trouvé qu'une solution d'acide sulfurique peut être utilisée au lieu de la solution aqueuse de sulfate de cuivre. Dans ce cas, la solubilisation de l'oxyde de cuivre ou de l'hydroxyde de cuivre dans le milieu acide conduit in situ à la formation de sulfate de cuivre. Ainsi la présence d'acide sulfurique H₂SO₄ résiduel comme impureté inhérente à la fabrication du sulfate de cuivre à partir de cuivre et d'acide sulfurique n'est pas un facteur limitant pour la réaction mise en oeuvre dans le procédé de l'invention. La concentration en acide sulfurique résiduel peut être comprise entre 0 et 1% en poids.

Selon une première variante de réalisation du procédé selon l'invention, la température initiale du milieu réactionnel est inférieure ou égale à 60°C, de préférence comprise entre 40°C et 60°C ; la température initiale du milieu réactionnel est maintenue pendant une durée comprise entre une heure et 3 heures, puis le milieu réactionnel est porté à une température supérieure maintenue pendant au moins une heure. La température supérieure à laquelle le milieu réactionnel est porté est au plus égale à 100°C, de préférence comprise entre 65°C et 80°C. Cette variante est préférée car elle convient pour la fabrication de suspensions aqueuses de brochantite ayant une teneur pondérale en matières solides supérieures à 10%. Lorsque le milieu réactionnel est porté à une température supérieure, la réaction peut conduire à une augmentation de viscosité qui peut limiter l'homogénéisation de la suspension. Afin de conserver une bonne homogénéité du mélange et un bon déroulement réactionnel, une dilution par ajout d'eau peut être réalisée de manière à diminuer le taux de matière sèche dans le mélange. On utilise selon cette première variante une solution aqueuse de sulfate de cuivre et une suspension aqueuse d'oxyde ou d'hydroxyde de cuivre avec un rapport molaire SO₄/Cu total allant de 0,25 à 0,34.

Selon une deuxième variante de réalisation du procédé selon l'invention, la température initiale du milieu réactionnel est comprise entre 70°C et 100°C, de préférence entre 80°C et 90°C. Cette température est maintenue pendant une durée comprise entre 0,5 heure et 3 heures. On utilise selon cette deuxième variante une solution aqueuse de sulfate de cuivre et une suspension aqueuse d'oxyde ou d'hydroxyde de cuivre avec un rapport molaire SO₄/Cu total allant de 0,33 à 0,40. Selon ce mode de réalisation, pour l'obtention exclusive d'antlérite, il est nécessaire que la suspension aqueuse d'oxyde de cuivre ou d'hydroxyde de cuivre soit ajoutée à la solution aqueuse de sulfate de cuivre préalablement portée à la température initiale.

A la fin de la réaction, l'excès de sulfate de cuivre est séparé par filtration ou neutralisé. La neutralisation de l'excès de sulfate de cuivre peut être faite par toute base organique ou minérale. Comme exemples de bases organiques, on peut citer les sels des acides carboxyliques ou polycarboxyliques dans lesquels le cation peut être du sodium, du potassium ou de l'ammonium. Comme autres exemples de bases organiques, on peut citer les amines. Comme exemples de bases minérales on peut citer la soude, la potasse, la chaux, l'ammoniaque, le carbonate de sodium ou de potassium.

Le produit réactionnel se présente sous forme d'une suspension aqueuse dont la teneur pondérale en matières solides est supérieure à 10% et dont la teneur pondérale en cuivre de la phase solide, constituée d'au moins 85% d'hydroxosulfates de cuivre, est supérieure à 48%. La teneur pondérale de la suspension peut être augmentée par une étape de concentration (centrifugation ou décantation). La pâte ainsi obtenue peut être utilisée pour la fabrication de formulations fongicides de type SC (suspension liquide concentrée), SE (suspo-émulsion) ou de type WG (granulés), dispersibles dans l'eau et stables au stockage.

Pour la fabrication de poudre mouillable du type WP, la pâte obtenue après concentration nécessite d'être séchée. Le séchage de la pâte peut être effectué à l'aide de tout type de séchoir connu de l'homme de métier afin d'obtenir une poudre titrant moins de 1 % d'humidité. Une alternative intéressante consiste en la fluidification de la pâte par tout agent chimique connu de l'homme de métier. La pâte fluidifiée peut alors être séchée par atomisation.

L'invention concerne aussi un procédé de préparation de compositions fongicides cupriques demandées par le marché, en utilisant les suspensions aqueuses de brochantite ou d'antlérite ou d'un mélange des deux préparées selon le procédé décrit précédemment, sous forme de pâte fluidifiée ou de poudre, utilisées comme seuls fongicides ou en association avec d'autres matières organiques de synthèse fongicides.

La fabrication des compositions fongicides cupriques s'effectue de façon connue en soi en utilisant les adjuvants usuels (dispersants, mouillant, agents anti-mousse, colorants, épaississants, charges inerte, correcteur de pH). Les matières organiques de synthèse fongicides sont choisies parmi notamment les composés dont les noms communs F-ISO sont le mancozèbe, le manèbe, le zinèbe, le cymoxanil, la famoxadone et le benthiavalicarb. On obtient selon l'invention des formulations fongicides cupriques de teneur en cuivre comprise entre 30 et 45%, ou entre 15% et 40%, de préférence entre 18 et 40%, selon que les hydroxosulfates de cuivre sont seuls fongicides ou associés à d'autres matières actives.

Dans les exemples suivants qui illustrent l'invention sans la limiter, les pourcentages s'entendent en poids sauf mention contraire.

### EXEMPLE 1 - broyage d'une suspension d'oxyde cuivrique

Dans un réacteur et sous agitation, on a introduit 19800 g d'eau puis 6600 g d'oxyde cuivrique technique de teneur en cuivre égale à 78 % et dont le diamètre moyen des particules est de l'ordre de 35 µm. Le mélange est pompé dans un broyeur à bille de type Dyno mill KDL pilot disposant d'un volume utile de 1,4 litres. Un recyclage est effectué à un débit élevé (environ 50 l/h) pendant 30 minutes afin d'affiner sommairement la granulométrie de l'oxyde cuivrique. En fin de recyclage, la granulométrie de l'oxyde cuivrique atteint 3 à 4 µm. On effectue alors un passage à un débit de 20 à 30 l/h afin d'atteindre une granulométrie finale de l'ordre de 2 µm. Les caractéristiques granulométriques de l'oxyde cuivrique ainsi broyé mesurées sur un granulomètre de type MALVERN mastersizer 2000 sont :
Diamètre moyen des particules = 2 µm
Pourcentage de particules dont le diamètre est > 6 µm = 10 %
Pourcentage de particules dont le diamètre est > 10 µm = 5 %
Pourcentage de particules dont le diamètre est > 25µm = 0,5 %

Refus au tamisage humide à 25 µm des particules solides de la suspension d'oxyde cuivrique (méthode CIPAC MT 59.3) = 0,5 % (exprimé par rapport à l'extrait sec de la suspension)

### EXEMPLE 2 - Fabrication de brochantite

Dans un réacteur et sous agitation, on a introduit 11330 g de solution de sulfate de cuivre de teneur en cuivre égale à 7,08% et contenant 0,2% d'acide sulfurique. La solution est chauffée à 50°C, puis 9500 g de suspension d'oxyde cuivrique (CuO) broyé finement selon l'exemple 1 et de teneur pondérale égale à 25% sont ajoutés. Le mélange est maintenu à 50°C pendant 1h30 au cours de laquelle la couleur de la suspension évolue du noir au gris. Après 1h30 de réaction, la température est élevée à 70°C. 6330 g d'eau sont ajoutés simultanément à la chauffe. La formation de la brochantite est marquée par le passage de la couleur grise à la couleur verte. La fin de la réaction est atteinte en gardant le mélange à 70°C sous agitation pendant 1h. En fin de réaction, la teneur pondérale en matières solides de la suspension de brochantite est de 17 %. Le mélange réactionnel est alors ajouté à un lait de chaux composé de 140 g de chaux et 900 ml d'eau. Une heure après l'ajout du mélange réactionnel dans le lait de chaux, on a filtré le mélange et obtenu environ 11000 g de pâte à 44,1 % d'extrait sec dont une partie a été séchée par étuvage. Les caractéristiques du solide ainsi obtenu sont les suivantes :
Teneur pondérale en cuivre : 50,8%
Teneur en eau < 1%
pH à 1% dans l'eau distillée : 5,9

L'analyse au rayon X montre que ce solide est composé de brochantite et gypse

### EXEMPLE 3 - Fabrication d'antlérite

Dans un réacteur et sous agitation, on a introduit 9770 g de solution de sulfate de cuivre à 7,16% de Cu contenant 0,2% d'acide sulfurique. La solution est chauffée à 90°C puis 7300 g de suspension d'oxyde cuivrique (CuO) technique broyé selon l'exemple 1 et de teneur en matière sèche égale à 24,36% sont ajoutés. L'addition de la suspension d'oxyde cuivrique est effectuée en 20 mn. En fin d'ajout, la couleur de la suspension devient verte. La suspension est maintenue entre 85 et 95°C pendant 30 mn. En fin de réaction, on a obtenu une suspension d'antlérite dont la teneur pondérale des matières solides est 22,4 %. On a alors filtré et obtenu une pâte dont une partie a été séchée et analysée. La poudre obtenue présente les caractéristiques suivantes:
Teneur pondérale en cuivre : 51,6 %
Teneur en eau < 1 %
pH à 1% dans l'eau distillée : 5,5

L'analyse par spectroscopie Infrarouge montre que ce solide est composé d'antlérite

### EXEMPLE 4 - Obtention d'une pâte fluidifiée de brochantite

Dans une cuve et sous agitation, on a introduit 11000 g de pâte obtenue selon l'exemple 2, puis 220 g d'un polynaphtalène sulfonate de sodium (agent dispersant). Après agitation, on a obtenu une pâte fluidifiée, qui, après un broyage humide, a été utilisée pour la fabrication de formulations de type SC ou WG. Les caractéristiques physiques de cette pâte fluide sont les suivantes :
Matières solides : 45,2%
Teneur pondérale en cuivre : 22,0%
Granulométrie : 2 µm

### EXEMPLE 5 - Obtention d'une pâte fluidifiée d'antlérite

Dans une cuve et sous agitation, on a introduit 7000 g de pâte obtenue selon l'exemple 3, puis 140 g d'un polynaphtalène sulfonate de sodium (agent dispersant). Après agitation, on a obtenu une pâte fluidifiée, qui, après un broyage humide, a été utilisée pour la fabrication de formulations de type SC ou WG. Les caractéristiques physiques de cette pâte fluide sont les suivantes :
Matières solides : 50,7%
Teneur pondérale en cuivre : 25,2%
Granulométrie : 1,6 µm

### EXEMPLE 6- Obtention de granulés de brochantite dispersibles dans l'eau

Dans une cuve munie d'un agitateur, on a introduit successivement 3700 g de pâte fluidifiée obtenue selon l'exemple 4 (Matières solides = 45,2%, %Cu = 22,0%), puis 59,8 g de polynaphtalène sulfonate, 160 g de lignosulfonate, 67 g d'un prémélange à 30 % de bleu de prusse et 55 g de gypse. La suspension a été alors envoyée dans une tour de séchage et on a obtenu ainsi des granulés à 40% de cuivre facilement dispersibles dans l'eau, présentant les caractéristiques suivantes (méthodes CIPAC) :
Rejet humide 45 µm : < 1%
Pouvoir suspensif : >75%
mousse : <20ml

### EXEMPLE 7- Obtention de granulés d'antlérite dispersibles dans l'eau

Dans une cuve munie d'un agitateur, on a introduit successivement 6600 g de pâte fluidifiée obtenue selon l'exemple 5 (Matières solides = 50,72%, %Cu = 25,15%), puis 143 g polynaphtalène sulfonate, 322 g de lignosulfonate et 151 g de gypse. La suspension a été alors envoyée dans une tour de séchage et on a obtenu ainsi des granulés à 42% de cuivre facilement dispersibles dans l'eau, présentant les caractéristiques suivantes (méthodes CIPAC) :
Rejet humide 45 µm : < 1%
Pouvoir suspensif : >75%
mousse : <20ml

### EXEMPLE 8- Obtention de granulés de brochantite et benthiavalicarb dispersibles dans l'eau

Dans une cuve munie d'un agitateur, on a introduit successivement 2550 g de pâte fluidifiée obtenue selon l'exemple 4 (Matières solides = 45,2%, %Cu = 22,0%), puis 49,2 g de polynaphtalène sulfonate, 120 g de lignosulfonate, 7,5 g d'alkyl naphtalène sulfonate, 3 g d'acide citrique monohydrate, 3 g d'un anti-mousse à base de diol acétylénique, 50 g d'un prémélange à 30 % de bleu de prusse, 72,3 g de gypse et 52,5 g d'un prémélange à 50% de benthiavalicarb. La suspension a été alors envoyée dans une tour de séchage et on a obtenu ainsi des granulés à 37,5% de cuivre et 1,75 % de benthiavalicarb facilement dispersibles dans l'eau, présentant les caractéristiques suivantes (méthodes CIPAC) :
Rejet humide 45 µm : < 1%
Pouvoir suspensif : >75%
mousse : <20ml

### EXEMPLE 9- Obtention de granulés de brochantite et mancozèbe dispersibles dans l'eau

Dans une cuve munie d'un agitateur, on a introduit successivement 1900 g de pâte fluidifiée obtenue selon l'exemple 4 (Matières solides = 45,2%, %Cu = 22,0%), puis 582 g d'eau, 305 g de polynaphtalène sulfonate, 101 g d'un prémélange à 30 % de bleu de prusse, 97 g de kaolin et 1258 g de mancozèbe de pureté supérieure à 85%. La suspension a été alors envoyée dans une tour de séchage et on a obtenu ainsi des granulés à 16 % de cuivre et 40 % de mancozèbe facilement dispersibles dans l'eau, présentant les caractéristiques suivantes (méthodes CIPAC) :
Rejet humide 45 µm : < 1%
Pouvoir suspensif : >75%
mousse : <20ml

### EXEMPLE 10- Obtention de granulés de brochantite à 20 % de cuivre dispersibles dans l'eau

Dans une cuve munie d'un agitateur, on a introduit successivement 2806 g de pâte fluidifiée obtenue selon l'exemple 4 (Matières solides = 45,2%, %Cu = 22,0%), puis 840 g d'eau, 350 g de polynaphtalène sulfonate, 101 g d'un prémélange à 30 % de bleu de prusse, 1153 g de gypse et 182 g de kaolin. La suspension a été alors envoyée dans une tour de séchage et on a obtenu ainsi des granulés à 20,7 % de cuivre facilement dispersibles dans l'eau, présentant les caractéristiques suivantes (méthodes CIPAC) :
Rejet humide 45 µm : < 1%
Pouvoir suspensif : >75%
mousse : <20ml

### EXEMPLE 11- Essais biologiques

Dans le cadre de la lutte contre le mildiou de la vigne, des essais de traitement ont été effectués comparativement entre la bouillie bordelaise du marché référencée BBRSR Disperss et une composition de bouillie bordelaise enrichie en cuivre obtenue selon l'exemple 6 de l'invention. Les essais ont été réalisés sur ceps fructifères selon la méthode CEB n°7 (essais sous brumisation avec contamination artificielle).

L'efficacité du traitement est déterminée en évaluant d'une part, le pourcentage de feuilles de vigne atteintes par le mildiou et le pourcentage de surface foliaire détruite, d'autre part, le pourcentage de grappes atteintes et le pourcentage de récolte détruite.

Les résultats des 10 notations effectuées sont rassemblés dans le tableau 1 (notations sur feuille) et le tableau 2 (notations sur grappes).

Ils montrent que la composition selon l'exemple 6, utilisée à la dose de 6 kg/ha, est aussi efficace que la bouillie bordelaise BBRSR Disperss utilisée à la dose de 12 kg/ha.

**Tableau 1 : Notations sur feuilles**

| Composition | Teneur en Cu de la composition | Dose de cuivre par hectare (kg) | Quantité de composition par hectare (kg) | % de feuilles atteintes | | | % de surface foliaire détruite | | |
|---|---|---|---|---|---|---|---|---|---|
| | | | | 1 | 2 | 3 | 4 | 5 | 6 |
| BBRSR Disperss | 20% | 2,4 | 12 | 47,0 | 37,0 | 29,3 | 5,3 | 4,6 | 3,4 |
| **Exemple 6** | 40% | 2,4 | 6 | 39,0 | 29,0 | 25,8 | 4,2 | 4,3 | 3,5 |
| % Attaque du Témoin | 0 | 0 | 0 | 66,0 | 72,0 | 84,5 | 10,2 | 15,2 | 33,7 |

**Tableau 2 : Notations sur grappes**

| Composition | Teneur en Cu de la composition | Dose de cuivre par hectare (kg) | Quantité de composition par hectare (kg) | % de grappes atteintes | | % de récolte détruite | |
|---|---|---|---|---|---|---|---|
| | | | | 7 | 8 | 9 | 10 |
| BBRSR Disperss | 20% | 2,4 | 12 | 50,5 | 58,0 | 5,0 | 9,8 |
| **Exemple 6** | 40% | 2,4 | 6 | 42,0 | 53,0 | 5,5 | 6,0 |
| % d'attaque du Témoin | 0 | 0 | 0 | 83,0 | 87,5 | 22,8 | 28,9 |

## Revendications

1. Procédé de fabrication de suspensions aqueuses de brochantite (Cu₄(OH)₆SO₄) ou d'antlérite (Cu₃(OH)₄SO₄) ou d'un mélange des deux, ayant une teneur pondérale en matières solides supérieure à 10%, par réaction d'une solution aqueuse de sulfate de cuivre CuSO₄ avec une suspension aqueuse d'oxyde de cuivre ou d'hydroxyde de cuivre utilisés selon un rapport molaire S0₄/Cu total allant de 0,25 à 0,40, ledit procédé étant **caractérisé en ce que** l'on mélange une solution aqueuse de CuS0₄ ayant une concentration pondérale en cuivre comprise entre 6% et 10% avec une suspension aqueuse d'oxyde de cuivre ou d'hydroxyde de cuivre ayant une concentration comprise entre 15% et 50% en poids et dont le diamètre moyen des particules solides est inférieur à 25 µm, la réaction étant réalisée à température contrôlée comprise entre 40°C et 100°C.

2. Procédé selon la revendication 1, **caractérisé en ce que** la suspension aqueuse d'oxyde de cuivre ou d'hydroxyde de cuivre contient en outre du sulfate de cuivre.

3. Procédé selon la revendication 1 ou 2, **caractérisé en ce que** le diamètre moyen des particules solides de la suspension aqueuse d'oxyde de cuivre ou d'hydroxyde de cuivre est compris entre 0,1 et 10 µm, de préférence entre 0,5 et 5 µm.

4. Procédé selon l'une des revendications 1 à 3, **caractérisé en ce que** le refus au tamisage humide à 25 µm des particules solides de la suspension d'oxyde de cuivre ou d'hydroxyde de cuivre par rapport à l'extrait sec est inférieur à 5% en poids, de préférence inférieur à 2% en poids.

5. Procédé selon l'une des revendications 1 à 4, **caractérisé en ce que** la solution aqueuse de CuS0₄ a une concentration pondérale en cuivre comprise entre 6,5% et 8%, de préférence entre 6,6% et 7,6%.

6. Procédé selon l'une des revendications 1 à 5 **caractérisé en ce que** la suspension aqueuse d'oxyde de cuivre ou d'hydroxyde de cuivre a une concentration comprise entre 20% et 30% en poids.

7. Procédé selon l'une des revendications 1 à 6, **caractérisé en ce que** l'oxyde de cuivre est l'oxyde cuivrique CuO.

8. Procédé selon l'une des revendications 1 à 7, **caractérisé en ce que** à la fin de la réaction, l'excès de sulfate de cuivre est éliminé par filtration ou neutralisé à l'aide d'une base organique ou minérale.

9. Procédé selon la revendication 8, **caractérisé en ce que** la neutralisation de l'excès de sulfate de cuivre est réalisée à l'aide d'une base organique telle qu'un sel d'acide carboxylique ou polycarboxylique dans lesquels le cation est l'ion sodium, l'ion potassium ou l'ion ammonium, ou une amine, ou à l'aide d'une base minérale telle que la soude, la potasse, la chaux, l'ammoniaque ou le carbonate de sodium ou de potassium.

10. Procédé selon l'une des revendications 1 à 9, **caractérisé en ce qu'**il est un procédé de fabrication de suspensions aqueuses de brochantite ayant une teneur pondérale en matières solides supérieure à 10%, par réaction d'une solution aqueuse de sulfate de cuivre CuS0₄ avec une suspension aqueuse d'oxyde de cuivre ou d'hydroxyde de cuivre utilisés selon un rapport molaire S0₄/Cu total allant de 0,25 à 0,34,et **en ce que**, après le mélange des réactifs, le milieu réactionnel est maintenu à une température initiale inférieure ou égale à 60°C pendant une durée comprise entre 1 heure et 3 heures, puis le milieu réactionnel est porté à une température supérieure que l'on maintient pendant au moins 1 heure.

11. Procédé selon la revendication 10, **caractérisé en ce que** la température initiale est de préférence comprise entre 40°C et 60°C.

12. Procédé selon la revendication 10 ou 11, **caractérisé en ce que** la température supérieure à laquelle le milieu réactionnel est porté, est au plus égale à 100°C, de préférence comprise entre 65°C et 80°C.

13. Procédé selon l'une des revendications 1 à 9, **caractérisé en ce qu'**il est un procédé de fabrication de suspensions aqueuses de brochantite, d'antlérite ou d'un mélange des deux ayant une teneur pondérale en matières solides supérieure à 10%, par réaction d'une solution aqueuse de sulfate de cuivre CuS0₄ avec une suspension aqueuse d'oxyde de cuivre ou d'hydroxyde de cuivre utilisés selon un rapport molaire S0₄/Cu total allant de 0,33 à 0,40 , et **en ce que** après le mélange des réactifs, le milieu réactionnel est maintenu à une température initiale au plus égale à 100°C pendant une durée comprise entre 0,5 heure et 3 heures.

14. Procédé selon la revendication 13, **caractérisé en ce que** la température initiale est comprise entre 70°C et 100°C, de préférence entre 80°C et 90°C.

15. Utilisation de suspensions aqueuses de brochantite (Cu₄(OH)₆SO₄) ou d'antlérite (Cu₃(OH)₄SO₄) ou d'un mélange des deux obtenus selon le procédé de fabrication conforme à l'une des revendications 1 à 14 pour la préparation de compositions fongicides cupriques.

16. Compositions fongicides cupriques obtenues à partir de suspensions aqueuses de brochantite et d'antlérite ou d'un mélange des deux préparées selon le procédé de fabrication conforme à l'une des revendications 1 à 14, lesdites compositions contenant un ou des adjuvants tels que un agent dispersant, un agent mouillant, un agent anti-mousse, un colorant, un épaississant, un correcteur de pH ou des charges, la teneur en cuivre desdites compositions étant comprise entre 30 et 45%.

17. Compositions fongicides cupriques obtenues à partir de suspensions aqueuses de brochantite ou d'antlérite ou d'un mélange des deux préparées selon le procédé de fabrication conforme à l'une des revendications 1 à 14, lesdites compositions contenant en outre un ou des adjuvants tels que un agent dispersant, un agent mouillant, un agent anti-mousse, un colorant, un épaississant, un correcteur de pH ou des charges, et au moins un fongicide de synthèse, la teneur en cuivre desdites compositions étant comprise entre 18 et 40%.

18. Compositions fongicides cupriques selon la revendication 17, caractérisées en que le fongicide de synthèse est choisi parmi le mancozèbe, le manèbe, le zinèbe, le Cymoxanil, la Famoxadone ou le Benthiavalicarb.

## Patentansprüche

1. Verfahren zur Herstellung wässriger Suspensionen von Brochantit (Cu₄(OH)₆SO₄) oder Antlerit (Cu₃(OH)₄SO₄) oder einer Mischung von beiden, mit einem Gewichtsgehalt an Feststoffen von mehr als 10 %, durch Reaktion einer wässrigen Lösung von Kupfersulfat CuSO₄ mit einer wässrigen Suspension von Kupferoxid oder Kupferhydroxid, die in einem Gesamtmolverhältnis SO₄/Cu von 0,25 bis 0,40 verwendet werden, wobei das Verfahren **dadurch gekennzeichnet ist, dass** eine wässrige Lösung von CuSO₄ mit einer Gewichtskonzentration von Kupfer zwischen 6 % und 10 % mit einer wässrigen Lösung von Kupferoxid oder Kupferhydroxid mit einer Konzentration zwischen 15 Gew.-% und 50 Gew.-% gemischt wird, und deren mittlerer Durchmesser fester Partikel kleiner ist als 25 µm, wobei die Reaktion bei einer gesteuerten Temperatur zwischen 40°C und 100°C durchgeführt wird.

2. Verfahren nach Anspruch 1, **dadurch gekennzeichnet, dass** die wässrige Suspension von Kupferoxid oder Kupferhydroxid außerdem Kupfersulfat enthält.

3. Verfahren nach Anspruch 1 oder 2, **dadurch gekennzeichnet, dass** der mittlere Durchmesser fester Partikel der wässrigen Suspension von Kupferoxid oder Kupferhydroxid zwischen 0,1 und 10 µm, vorzugsweise zwischen 0,5 und 5 µm, beträgt.

4. Verfahren nach einem der Ansprüche 1 bis 3, **dadurch gekennzeichnet, dass** der feuchte Siebrückstand bei 25 µm der festen Partikel der Suspension von Kupferoxid oder Kupferhydroxid im Verhältnis zum Trockenextrakt kleiner ist als 5 Gew.-%, vorzugsweise kleiner als 2 Gew.-%.

5. Verfahren nach einem der Ansprüche 1 bis 4, **dadurch gekennzeichnet, dass** die wässrige Lösung von CuSO₄ eine Gewichtskonzentration von Kupfer zwischen 6,5 % und 8 %, vorzugsweise zwischen 6,6 % und 7,6 %, aufweist.

6. Verfahren nach einem der Ansprüche 1 bis 5, **dadurch gekennzeichnet, dass** die wässrige Lösung von Kupferoxid oder Kupferhydroxid eine Konzentration zwischen 20 Gew.-% und 30 Gew.-% aufweist.

7. Verfahren nach einem der Ansprüche 1 bis 6, **dadurch gekennzeichnet, dass** das Kupferoxid Kupfer(II)-oxid CuO ist.

8. Verfahren nach einem der Ansprüche 1 bis 7, **dadurch gekennzeichnet, dass** am Ende der Reaktion der Überschuss von Kupfersulfat abfiltriert oder mit Hilfe einer organischen oder mineralischen Base neutralisiert wird.

9. Verfahren nach Anspruch 8, **dadurch gekennzeichnet, dass** die Neutralisation des Überschusses von Kupfersulfat mit Hilfe einer organischen Base, wie eines Carbonsäure- oder Polycarbonsäuresalzes durchgeführt wird, wobei das Kation Natriumion, Kaliumion oder Ammoniumion ist, oder ein Amin, oder mit Hilfe einer mineralischen Base, wie Soda, Kaliumhydroxid, Kalk, Ammoniak oder Natrium- oder Kaliumcarbonat.

10. Verfahren nach einem der Ansprüche 1 bis 9, **dadurch gekennzeichnet, dass** es ein Verfahren zur Herstellung wässriger Suspensionen von Brochantit mit einem Gewichtsgehalt an Feststoffen von mehr als 10 % ist, durch Reaktion einer wässrigen Lösung von Kupfersulfat CuSO₄ mit einer wässrigen Suspension von Kupferoxid oder Kupferhydroxid, die in einem Gesamtmolverhältnis SO₄/Cu von 0,25 bis 0,34 verwendet werden, und dadurch, dass, nach dem Mischen der Reagenzien, das Reaktionsmedium bei einer Anfangstemperatur kleiner oder gleich 60°C während einer Dauer zwischen 1 Stunde und 3 Stunden gehalten wird, und anschließend das Reaktionsmedium auf eine höhere Temperatur gebracht wird, die während mindestens 1 Stunde gehalten wird.

11. Verfahren nach Anspruch 10, **dadurch gekennzeichnet, dass** die Anfangstemperatur vorzugsweise zwischen 40°C und 60°C liegt.

12. Verfahren nach Anspruch 10 oder 11, **dadurch gekennzeichnet, dass** die höhere Temperatur, auf die das Reaktionsmedium gebracht wird, höchstens gleich 100°C ist, vorzugsweise zwischen 65°C und 80°C.

13. Verfahren nach einem der Ansprüche 1 bis 9, **dadurch gekennzeichnet, dass** es ein Verfahren zur Herstellung wässriger Suspensionen von Brochantit, Antlerit oder einer Mischung von beiden mit einem Gewichtsgehalt an Feststoffen von mehr als 10 % ist, durch Reaktion einer wässrigen Lösung von Kupfersulfat CuSO₄ mit einer wässrigen Suspension von Kupferoxid oder Kupferhydroxid, die in einem Gesamtmolverhältnis SO₄/Cu von 0,33 bis 0,40 verwendet werden, und dadurch, dass, nach dem Mischen der Reagenzien, das Reaktionsmedium bei einer Anfangstemperatur von höchstens 100°C während einer Dauer zwischen 0,5 Stunden und 3 Stunden gehalten wird.

14. Verfahren nach Anspruch 13, **dadurch gekennzeichnet, dass** die Anfangstemperatur zwischen 70°C und 100°C liegt, vorzugsweise zwischen 80°C und 90°C.

15. Verwendung wässriger Suspensionen von Brochantit (Cu₄(OH)₆SO₄) oder Antlerit (Cu₃(OH)₄SO₄) oder einer Mischung von beiden, die gemäß dem Herstellungsverfahren nach einem der Ansprüche 1 bis 14 erhalten werden, zur Herstellung von Kupfer-Fungizidzusammensetzungen.

16. Kupfer-Fungizidzusammensetzungen, welche aus wässrigen Suspensionen von Brochantit und Antlerit oder einer Mischung von beiden erhalten werden, die gemäß dem Herstellungsverfahren nach einem der Ansprüche 1 bis 14 hergestellt werden, wobei die Zusammensetzungen ein oder mehrere Adjuvantien enthalten, wie ein Dispergiermittel, ein Benetzungsmittel, ein Anti-Schaummittel, ein Färbemittel, ein Verdickungsmittel, ein pH-Korrekturmittel oder Chargen, wobei der Kupfergehalt der Zusammensetzungen zwischen 30 und 45 % liegt.

17. Kupfer-Fungizidzusammensetzungen, weiche aus wässrigen Suspensionen von Brochantit und Antlerit oder einer Mischung von beiden erhalten werden, die gemäß dem Herstellungsverfahren nach einem der Ansprüche 1 bis 14 hergestellt werden, wobei die Zusammensetzungen außerdem ein oder mehrere Adjuvantien, wie ein Dispergiermittel, ein Benetzungsmittel, ein Anti-Schaummittel, ein Färbemittel, ein Verdickungsmittel, ein pH-Korrekturmittel oder Chargen, und mindestens ein Synthesefungizid enthalten, wobei der Kupfergehalt der Zusammensetzungen zwischen 18 und 40 % liegt.

18. Kupfer-Fungizidzusammensetzungen nach Anspruch 17, **dadurch gekennzeichnet, dass** das Synthesefungizid aus Mancozeb, Maneb, Zineb, Cymoxanil, Famoxadon oder Benthiavalicarb ausgewählt ist.

## Claims

1. Method for manufacturing aqueous suspensions of brochantite (Cu₄(OH)₆SO₄) or antlerite (Cu₃(OH)₄SO₄) or a mixture of the two, having a proportion by weight of solid matter greater than 10%, by causing an aqueous solution of copper sulphate CuSO₄ to react with an aqueous suspension of copper oxide or copper hydroxide used in a total SO₄/Cu molar ratio ranging from 0.25 to 0.40, said method being **characterised in that** an aqueous solution of CuSO₄ having a concentration of copper by weight of between 6% and 10% is mixed with an aqueous solution of copper oxide or copper hydroxide having a concentration by weight of between 15% and 50% and wherein the mean diameter of the solid particles is less than 25µm, the reaction being carried out at a controlled temperature of between 40° and 100°C.

2. Method according to claim 1, **characterised in that** the aqueous suspension of copper oxide or copper hydroxide also contains copper sulphate.

3. Method according to claim 1 or claim 2, **characterised in that** the mean diameter of the solid particles of the aqueous suspension of copper oxide or copper hydroxide is between 0.1 and 10pm, preferably between 0.5 and 5µm.

4. Method according to any of claims 1 to 3, **characterised in that** the retention in wet sieving at 25µm of the solid particles of the suspension of copper oxide or copper hydroxide with respect to the solid content is less than 5% by weight, preferably less than 2% by weight.

5. Method according to any of claims 1 to 4, **characterised in that** the aqueous solution of CuSO₄ has a concentration by weight of copper of between 6.5% and 8%, preferably between 6.6% and 7.6%.

6. Method according to any of claims 1 to 5, **characterised in that** the aqueous suspension of copper oxide or copper hydroxide has a concentration of between 20% and 30% by weight.

7. Method according to any of claims 1 to 6, **characterised in that** the copper oxide is cupric oxide CuO.

8. Method according to any of claims 1 to 7, **characterised in that**, at the end of the reaction, the excess copper sulphate is eliminated by filtration or neutralised by means of an organic or mineral base.

9. Method according to claim 8, **characterised in that** the neutralisation of the excess copper sulphate is carried using an organic base such as a carboxylic or polycarboxylic acid salt in which the cation is the sodium ion, the potassium ion or the ammonium ion, or an amine, or by means of a mineral base such as soda, potash, lime, ammonium hydroxide or sodium or potassium carbonate.

10. Method according to any of claims 1 to 9, **characterised in that** it is a method for manufacturing aqueous suspensions of brochantite having a proportion by weight of solid matter greater than 10%, by causing an aqueous solution of copper sulphate CuSO₄ to react with an aqueous suspension of copper oxide or copper hydroxide used in a total SO₄/Cu molar ratio ranging from 0.25 to 0.34, and **in that**, after mixing of the reagents, the reaction medium is maintained at an initial temperature of less than or equal to 60°C for a period of between 1 hour and 3 hours, and then the reaction medium is raised to a higher temperature that is maintained for at least 1 hour.

11. Method according to claim 10, **characterised in that** the initial temperature is preferably between 40°C and 60°C.

12. Method according to claim 10 or claim 11, **characterised in that** the higher temperature to which the reaction medium is raised is no more than 100°C, preferably between 65°C and 80°C.

13. Method according to any of claims 1 to 9, **characterised in that** it is a method for manufacturing aqueous suspensions of brochantite, antlerite or a mixture of the two having a proportion by weight of solid matter greater than 10%, by causing an aqueous solution of copper sulphate CuSO₄ to react with an aqueous suspension of copper oxide or copper hydroxide used in a total SO₄/Cu molar ratio ranging from 0.33 to 0.40, and **in that**, after mixing of the reagents, the reaction medium is maintained at an initial temperature of no more than 100°C for a period of between 0.5 hours and 3 hours.

14. Method according to claim 13, **characterised in that** the initial temperature is between 70°C and 100°C, preferably between 80°C and 90°C.

15. Use of aqueous suspensions of brochantite (Cu₄(OH)₆SO₄) or antlerite (Cu₃(OH)₄SO₄) or of a mixture of the two obtained according to the manufacturing method in accordance with any of claims 1 to 14 for preparing cupric fungicidal compositions.

16. Cupric fungicidal compositions obtained from aqueous suspensions of brochantite and antlerite or a mixture of the two prepared according to the manufacturing method in accordance with any of claims 1 to 14, said compositions containing one or more adjuvants such as a dispersant, a wetting agent, an anti-foaming agent, a dye, a thickener, a pH corrector or fillers, the copper content of said compositions being between 30% and 45%.

17. Cupric fungicidal compositions obtained from aqueous suspensions of brochantite or antlerite or a mixture of the two prepared according to the manufacturing method in accordance with any of claims 1 to 14, said compositions further containing one or more adjuvants such as a dispersant, a wetting agent, an anti-foaming agent, a dye, a thickener, a pH corrector or fillers, and at least one synthesis fungicide, the copper content of said compositions being between 18% and 40%.

18. Cupric fungicidal compositions according to claim 17, **characterised in that** the synthesis fungicide is chosen from mancozeb, maneb, zineb, cymoxanil, famoxadone or benthiavalicarb.
